# EUROPEAN PATENT SPECIFICATION

(11) **EP 2 824 631 B1**
(45) Date of publication and mention of the grant of the patent: **04.09.2019**
(21) Application number: 14175994.4
(22) Date of filing: 07.07.2014
(51) Int. Cl.: G06Q 30/02

(54) **Information providing system and passenger conveyor belt**
Informationsbereitstellungssystem und Passagierförderband
Système de fourniture d'informations et courroie de transporteur de passagers

(30) Priority: 08.07.2013 JP 2013142500
(43) Date of publication of application: 14.01.2015
(73) Proprietor: Ricoh Company, Ltd., Tokyo 143-8555 (JP)
(72) Inventor: Nakata, Toshiko, Tokyo 143-8555 (JP); Ueda, Yuichiro, Tokyo 143-8555 (JP); Nishizaki, Yoshiaki, Tokyo 143-8555 (JP); Nakamura, Yasuyuki, Tokyo 143-8555 (JP); Itoh, Masahiko, Tokyo 143-8555 (JP)
(74) Representative: J A Kemp

(56) References cited:
- EP-A1- 1 783 070
- JP-A- 2009 029 524
- US-A- 6 047 814
- US-A1- 2004 010 446

## Description

The present application relates to an information providing system and a handrail belt. More specifically, an information providing system for providing information to users of the passenger conveyor by utilizing a portable terminal that the users possess.

EP1783070 A1 discloses a method for self-synchronising a conveyer belt sensor system.

US 2004/0010446 A1 discloses a mobile customer relationship management system.

Conveyor users near a passenger conveyor, such as an escalator and a moving walkway, may receive an offer of information provided by advertisements on the handrail portion of the passenger conveyor and/or via the advertising mediums and posters placed around the entrance near the passenger conveyor. Further the advertising mediums and posters are arranged at a position in the users' field of vision during the movement of the passenger conveyor. For example the advertising mediums and posters are attached or hung on the wall near the passenger conveyor.

In recent years, not only printed advertisements but also digital signage (such as electronic signboards) located in the vicinity of the passenger conveyor have been utilized.

However, as a user is moved when riding on a passenger conveyor, it can be difficult for a user to recognize what has been posted in a fixed manner.

Further, even when a display device showing digital signage is set up near the passenger conveyor and shows a video having a continuous image, the user's field of vision may not be at the middle of the video display device and, as a result thereof, the user may get incomplete information. Therefore, the user might not receive effective or necessary information.

Because the method of providing information such as the digital signage or the posters described above is for distributing advertisement corresponding to an unspecified user, it is impossible to provide information suitable for each individual user and distribute information that individual users need.

To solve this problem, for example, passengers of the escalator carry an information card in advance and set a guide registration unit device for the information card, so as to register the destination. A control unit of the escalator system guides advancement on the escalator based on destination guide information stored in an information storage unit in advance, and selects a destination guide information corresponding to a destination that is registered by setting the information card. A user approaches an escalator to bring the information card into the vicinity of a detector having an information providing apparatus to be displayed on the display device.

According to the present invention, there are provided an information providing system and a handrail belt as defined in the independent claims. The information providing system includes a passenger conveyor having a handrail belt and a storage unit that stores a first tag identification information. The passenger conveyor further has a portable terminal that reads the first tag identification information and transmits the first tag identification information and a portable terminal identification information (portable terminal ID). The information providing system further includes an information providing device that transmits a providing information corresponding to the first tag identification information and the portable terminal ID.

As a result, the information providing system provides information to the user in a simple configuration.

In the accompanying drawings of exemplary embodiments:
Figure 1(A) is a schematic diagram of an escalator as a passenger conveyor.
Figure 1(B) is an enlarged view of a portion of the handrail belt of Figure 1(A).
Figures 2(A)-2(C) show diagrams illustrating the tag portion provided in the handrail belt.

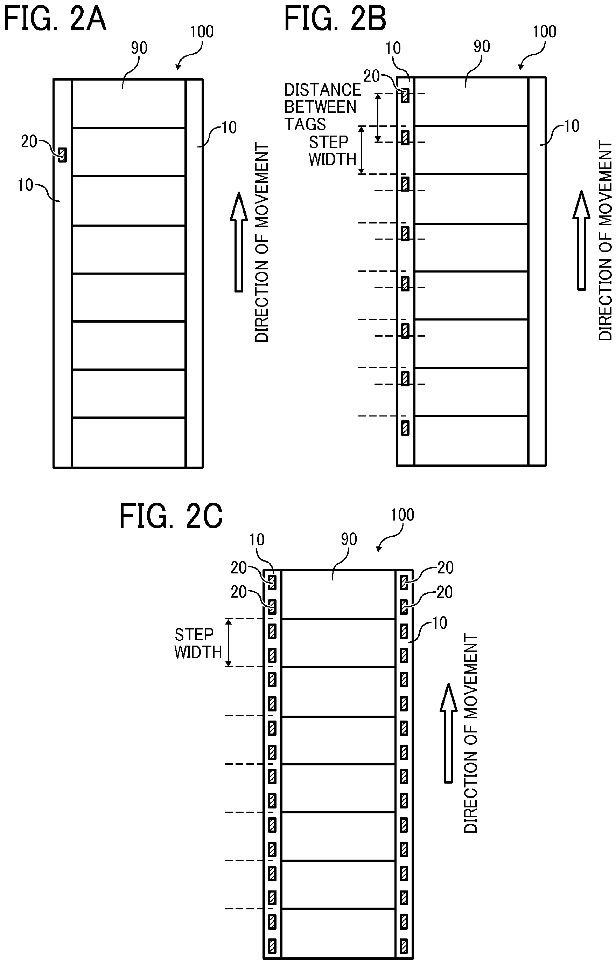

Figure 2(A) is a diagram illustrating a tag provided in the front of the handrail section.
Figure 2(B) is a diagram illustrating a tag in the width of a step.
Figure 2(C) is a diagram illustrating two tags in the width of the step.

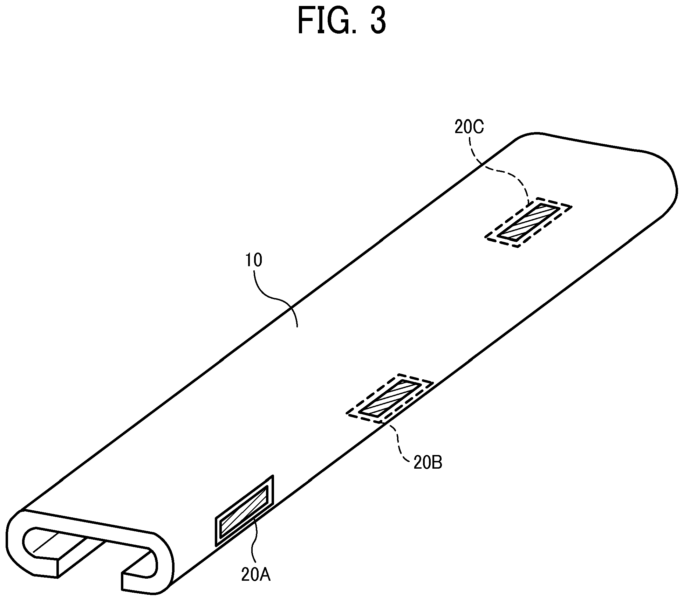

Figure 3 is a diagram of a mounting position of the tag on the handrail belt.

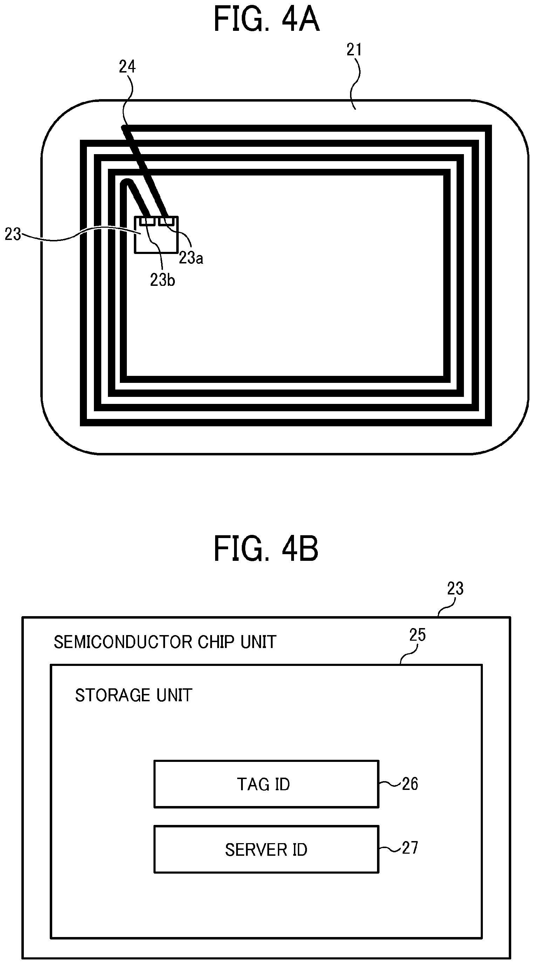

Figure 4(A) is a schematic diagram of the tag.
Figure 4(B) is a functional block diagram of a semiconductor chip portion (B) in the tag.

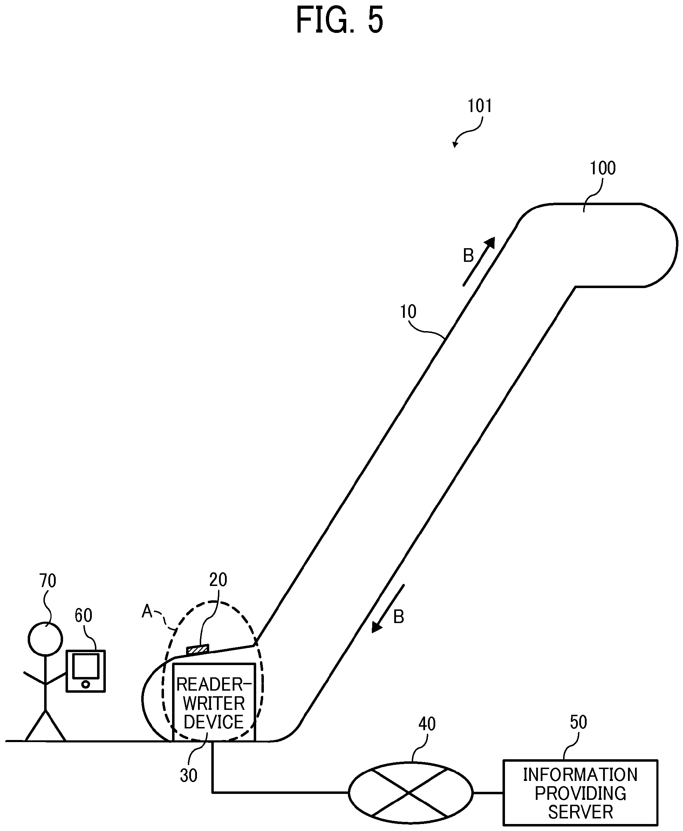

Figure 5 is a diagram illustrating an information providing system.

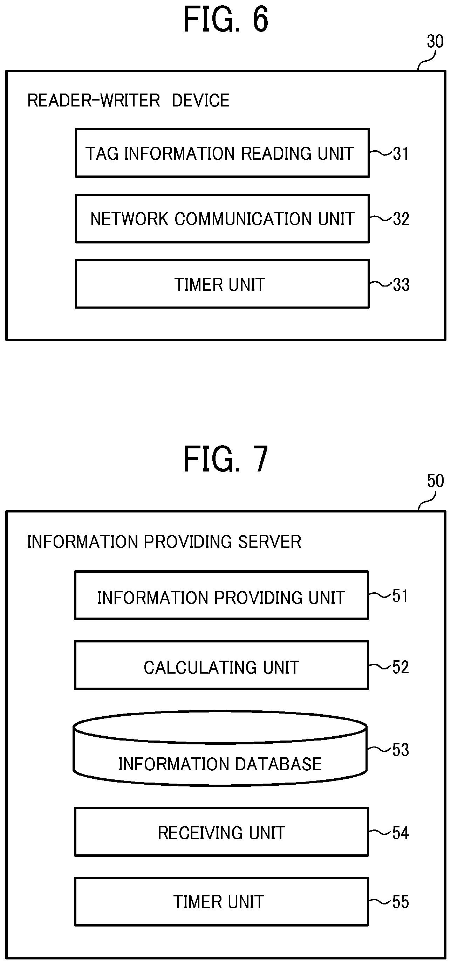

Figure 6 is a diagram illustrating a reader function of a reader/writer device.
Figure 7 is a diagram of a server of the information providing system.

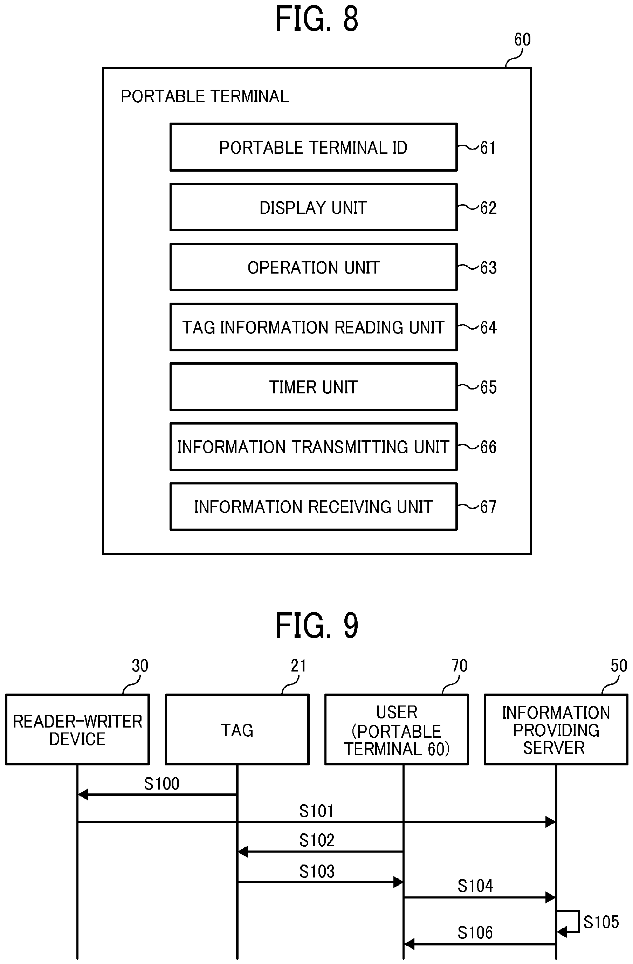

Figure 8 is a diagram of a portable terminal.
Figure 9 is a sequence diagram of a process performed by the information providing system.

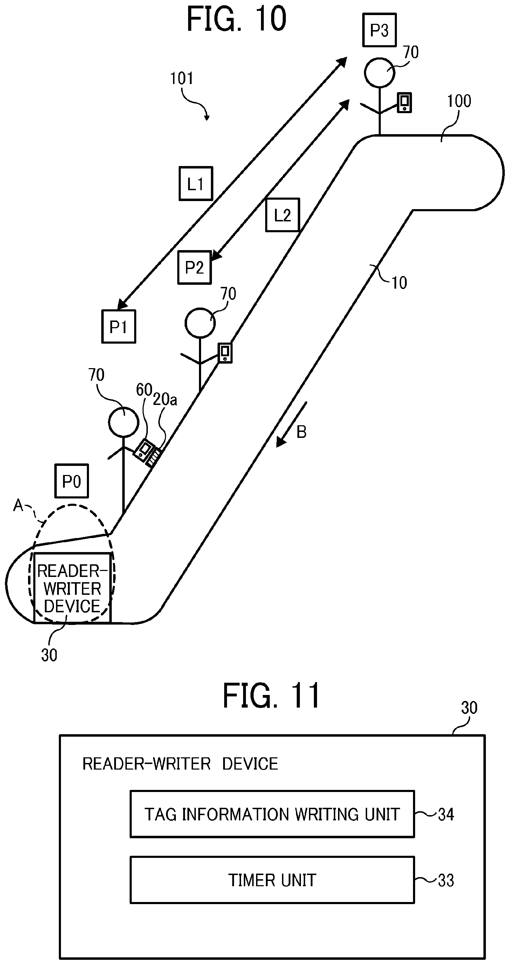

Figure 10 is a diagram illustrating a user position calculated in the information providing system.
Figure 11 is a diagram illustrating a writing function of the reader/writer device.

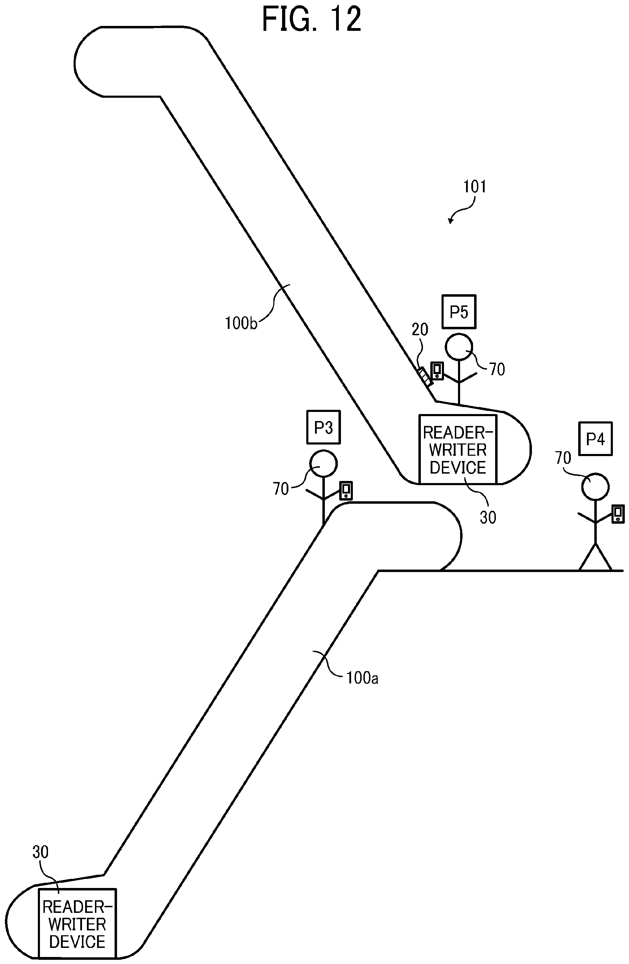

Figure 12 is a diagram illustrating a modified information providing system.

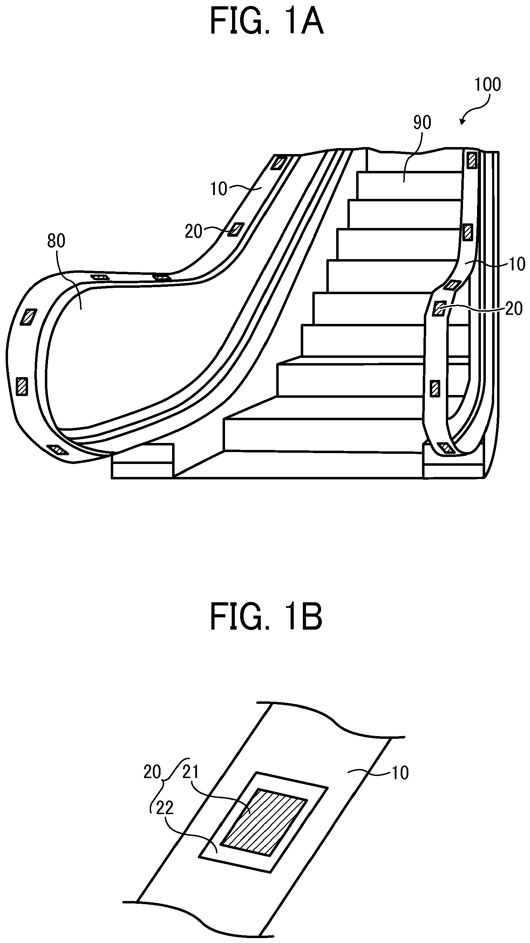

Hereinafter, the details with reference to embodiments shown in FIG. 1 to FIG. 12 is described.

An information providing 101 system includes a passenger conveyor 100 (escalator), a portable terminal 60, and an information providing server 50.

The passenger conveyor 100 includes a handrail belt 10 having a tag 21. Further, the tag 21 includes a storage unit 25 that stores tag identification information 26 (Tag ID) and a communication unit 24 (an antenna) capable of wirelessly communicating with the portable terminal 60.

The portable terminal 60 reads the tag identification information 26 and transmits the portable terminal ID 61 and the tag identification information 26 to the information providing server 50.

The information providing server 50 transmits information 53 to the portable terminal 60 according to the portable terminal ID 61 and the tag identification information 26.

### (The handrail belt of the passenger conveyor)

Figure 1(A) is a schematic diagram of an escalator, which is an example of the passenger conveyor with the handrail belt. The escalator going in the up direction as a passenger conveyor is described. However the escalator in the down direction can be also configured similar to the escalator in the down direction.

As shown in FIG. 1(A), the handrail belt 10 is stretched over the handrail portion 80 of the escalator 100. Further the handrail belt 10 is an endless belt and rotates at a speed substantially equal to the step portion 90.

A tag portion 20 including the tag 21 that is the wireless communication IC tag utilizing a communication method, such as RFID (Radio Frequency Identification) or NFC (Near Field Communication), etc., is provided at predetermined intervals with respect to each other.

Further, as shown in FIG. 1(B), the tag portion 20 or the tag 21 in the tag portion 20 is adhered with a protective film 22, such as a laminate film, at a predetermined position of the handrail belt 10.

It is preferable that a target mark is attached within the communication range or at the position of the tag 21 on the handrail belt 10. By the target mark, the user can recognize where the tag 21 is on the handrail belt 10.

As described below, the tag portion 20 with the tag 21 in the handrail belt 10 is provided at a position where the user can keep the portable terminal 60 close to the tag 21 (or the target mark) when the user is on the step portion 90. Further, the position is determined so that the user of the conveyor can keep the portable terminal 60 close to the tag portion 20 until the portable terminal 60 and the tag portion communicate with each other.

Because the handrail belt 10 rotates around the handrail portion 80 of the escalator 100, a user can keep the portable terminal 60 close to the tag portion 20 when tag portion 20 is exposed on the upper side of the handrail portion 80. Alternatively, the user cannot keep the portable terminal 60 close to the tag portion 20 when the tag 21 is on the lower side of the handrail portion 80.

Accordingly, as shown in FIG. 2(A), more than two of the tag portions 20 are on the handrail belt 10 and are spaced in intervals such that at least one of the two tag portions 20 always comes on the upper side (exposed side) of the handrail portion 80. Therefore, the user can catch the exposed tag portion 20. However, if the quantity of tag portions 20 is small, (for example, two as described above), it is necessary for the user to move to the position of the tag portion 20 or to start to ride on the escalator at the time that the tag portion 20 comes around. Therefore, as shown in FIG. 2(B), it is preferred that at least one tag portion 20 be arranged in at least a step width of the step portion 90 of the escalator 100 (step interval) in the tag portion 20. Further, it is preferred that the tag portions 20 are spaced apart from each other at a predetermined distance (tag interval). Accordingly, it is possible for a user to keep the portable terminal 60 adjacent a tag portion 20 without having to move on the escalator 100 no matter what part of the step portions on which the user rides.

Furthermore, since two or more users often ride on a single one of the step portions of the escalator 100, a tag portion 20 may be provided to the handrail belt 10 on both sides of the step portion 90. When provided on both sides, each of the tag portions 20 may be either at a symmetrical position or an asymmetric position.

It is also possible to provide two or more of the tag portions 20 at a position of the handrail portion corresponding to the width of the step portion. Figure 2(C) shows an example of two positions for the tag portions corresponding to the step width. Tag portions 20 are located on the handrail belts 10, which are on both sides of the step portion.

The following description explains the case where the tag portion 20 is provided with one or more steps within the width.

The quantity of the tag portions 20 can be determined by appropriately selecting according to a communication distance of the tag portion 20 and a range in which the portable terminal 60 can read any information. If, for example, the communication distance of the tag 21 is large, it is possible to reduce the number of the tag portions 20.

Further, in FIGs. 1(A) and 1(B), the tag portion 20 is provided on an exposed surface of the handrail belt 10. However, the tag portion 20 does not need to be on an exposed surface of the handrail belt 10, so long as the tag portion 20 is able to communicate with the portable terminal 60. For example, as shown in FIG. 3, the tag portion 20 may be attached to a side surface of the handrail belt 10 (reference numeral 20A), a side area of the back side of the handrail belt 10 (reference numeral 20B), and a surface of the back side of the handrail belt 10 (reference numeral 20C).

It is preferable for the tag portion 20 to be in a visible position for the user and to be in a state where the handrail belt 10 is mounted on the handrail portion 80. That is, it is preferable for the tag portion 20 to be on the exposed surface of the handrail belt 10. When the tag portion is provided at the position behind the handrail belt 10 (20B or 20C), a target mark is attached on the handrail belt 10 so that the user can determine where the mounting position of the tag portion 20 is located. The method of installing the tag 21 includes attaching the tag 21 to the belt 10 and covering the tag 21 with a protective film 22. The tag 21 is attached to the belt 10 after adhesive is painted on the tag 21, or is installed by using a fixed member.

In order to facilitate the exchange of the tag 21, a mounting method that allows the tag 21 to be removed is preferable. Complex construction is not required when attaching the tag 21 to the handrail belt 10, and the tag 21 is mounted easily. It is possible to attach the tag 21 easily to the passenger conveyer already installed.

### (Tag configuration)

Figure 4(A) shows a schematic diagram of the tag 21. It is possible to use existing RFID tags as the tag 21. For example, the tag 21 includes an antenna unit 24 (Loop antenna) having a wireless communication function with the outside, and a semiconductor chip unit 23 of 0.4 ∼ 1.0mm square (RFID chip).

Since one end of the loop antenna 24 is connected to the terminal portions 23a of the semiconductor chip 23 and the other end of the loop antenna 24 is connected to the terminal portion 23b of the semiconductor chip unit 23, the electromagnetic induction is generated, and both the power transmission and the wireless communication are generated by the electromagnetic induction. Further, as shown in FIG. 4(B), a storage unit 25 (memory) is mounted on the semiconductor chip unit 23. The storage unit 25 stores at least a tag identification information (tag ID) 26 that uniquely identifies the tag 21 and a server identification information 27 (like an IP address), by which a portable terminal 60 kept close to the tag 21 identifies an information providing server.

### (Information providing system)

Next, the information providing system using the passenger conveyor with a handrail belt 10, which is provided with the tag 21, is described.

Figure 5 is a block diagram of the information providing system 101 according to the present exemplary embodiment. Near an entrance/exit gate of the escalator 100, a reader/writer device 30 is provided to read the information of the tag ID 26 stored in the tag 21. In the present exemplary embodiment, the reader/writer device 30 has only a reading function without a write operation to the tag 21.

Furthermore, it is preferable for the reader/writer device 30 to be fixed to the handrail portion 80 near the entrance/exit of the elevator. However, the installation position of the reader/writer device 30 is not particularly limited to near the entrance/exit of the elevator, as long as the reader/writer device 30 can communicate with at least one of the tags 21.

In FIG. 5, the range indicated by the dotted line "A" shows the readable range of the reader/writer device 30. The handrail belt 10 is moving and rotating at a predetermined speed in the direction of arrow "B" in the FIG. 5. The tag ID 26 that is stored in the storage unit 25 is read when the tag 21 comes in the range "A" by moving and/or rotating of the handrail belt 10. Further, the reader/writer device 30 is connected to the information providing server 50 via a wireless or wired network 40 (such as ethernet).

Figure 6 is a functional block diagram of the reader/writer device 30. The reader/writer device 30 includes a tag information reading unit 31 to read the tag ID 26 stored in the storage unit 25 of the tag 21, and a network communication unit 32 to transmit the tag ID 26 read by the tag information reading unit 31 to the information providing server 50 via the network 40. Further, the reader/writer 30 may include a timer 33, and then the network communication unit 32 transmits to the information providing server 50 both the tag ID 26 and the time that the tag information reading unit 31 reads the tag ID 26.

In addition, the reader/writer device 30 may utilize a reader/writer function like that of other communication devices, such as cell phones.

Figure 7 shows a functional block diagram of the information providing server 50. The information providing server 50 includes an I/O interface, an auxiliary storage device (such as HDD), a memory device (such as RAM), an information processing device (such as CPU), and a bus by which each device is connected. The information providing server 50 also includes an information providing unit 51 to transmit the information suitable for the user 70 to the portable terminal 60 of the user 70.

An information database 53(Here, the database is an organized collection of data and refers to the data themselves) is associated with the portable terminal ID 61, and includes information based on factors and attributes (such as age or gender, etc.) of the user 70 and the action history of the user 70. The information database 53 is expected to show the interests of the user 70. For example, the information database 53 includes new product information about a store and/or a discount coupon about the store based on the information of the store where the user 70 often goes. This information 53 is provided to the portable terminal ID 61 of the user 70.

Further, it is preferable for the portable terminal ID 61 to have at least two or more information databases 53 of which the contents, the subjects, or the amounts thereof (volume) are different from each other. For example, the information databases 53 have information about the same subject and the same store, yet the first information database may include information of small amounts of data, such as still image data, while the second information database may include information of large amounts data, such as moving picture data, i.e., video.

As a method of storing information in information database 53, it is sufficient that the data content be associated with a plurality of portable terminal IDs 61. One data content of the information database 53 is associated with the portable terminal ID 61 to be shared with a plurality of portable terminals 60.

Further, the information providing server 50 includes a calculation unit 5 for calculating the position of a user on a passenger conveyor.

The method of calculating the user's position is described below. Based on the calculation result of the user's position, the calculation unit 5 calculates the time that the user needs to get off the escalator 100 (the remaining time), and the information providing unit 51 transmits information from the information database 53 having the amount of data corresponding that which can be reviewed in the remaining time. A predetermined moving speed of the handrail belt 10 or step portion 90 is set in the calculation unit 52.

Further, the information providing server 50 includes a receiving unit 54 to receive the information such as the tag ID 26 from the reader/writer 30 and the portable terminal 60 and a timer 55 to get time when the receiving unit 54 received the information. The information providing server 50 may consist of a plurality of information processing devices. The communication line system (3G, WiFi, etc.) can be used between the portable terminal 60 and the information providing server 50.

The portable terminal 60 may be a smart phone or a cell phone, in which an executable software (application) is downloaded.

Figure 8 is a block diagram of the portable terminal 60. The portable terminal 60 includes: a storage unit to store the portable terminal ID 61, a display unit 62 to display the information of the information database 53 provided by the information providing server 50, an operation unit 63 to perform various operations, a timer unit, and a tag information reading unit to read the information in the storage unit 25 by performing radio communication with the tag 21, an information transmitting unit to transmit the portable terminal ID 61 and the tag ID 26. The portable terminal 60 further includes an information receiving unit 67 to receive the information of the information database 53 from the information providing server 50 and display the information database 53 on the display unit 62.

### (Process flow)

A process of the information providing system 101 is described below. FIGURE 9 is a sequence diagram of processing of the information providing system 101.

(S100) The tag information reading unit 31 of the reader/writer device 30 reads the tag ID 26 of the tag 21 in a readable range A (shown as a broken line in FIG. 5). (S101) The network communication unit 32 transmits the tag ID 26 to the information providing server 50.

The process of steps S100 and S101 is performed continuously in principle while the escalator 100 is operating. Moreover, the receiving unit 54 of the information providing server 50 gets a time received from the tag ID 26 of the reader/writer device 30 (refer to a first tag reading time) by the timer 55. The first tag reading time can be substantially equal to the time when the reader/writer device 30 has read the tag ID 26 of the tag 21 in the readable range "A" since both a processing time of the information providing server 50 and a communicating time between the information providing server 50 and the reader-writer device 30 have very short time generally. In the case where the reader/writer device 30 includes the timer 33, the first tag reading time is equal to the time that the reader/writer 30 reads the tag 21, and the first tag reading time may be transmitted to the information providing server 50.

(S102) The information transmitting unit 66 of the portable terminal 60 transmits the tag ID 26 and the portable terminal ID 61 to the information providing server 50 which is identified by the server identification information 27.

Moreover, the receiving unit 54 of the information providing server 50 gets "the time at which the receiving unit 54 received the portable terminal ID 61 and the tag ID 26 in the portable terminal" (refer to a second tag reading time) by the timer 55.

The second tag reading time can be substantially equal to the time when the portable terminal 60 has read the tag ID 26 of the tag 21 since both a processing time of the information providing server 50 and a communicating time between the information providing server 50 and the portable terminal 60 have a very short time generally. In the case where the portable terminal 60 includes the timer 65, the second tag reading time is equal to the time that the portable terminal 60 reads the tag 21, and the second tag reading time may be transmitted to the information providing server 50.

By the process of S100 ∼ SI04, the tag ID 26 read by the reader/writer device 30 in the readable range "A" is intermittently transmitted to the information providing server 50. Further, when the user 70 keeps the portable terminal 60 close to the tag portion 20, the tag ID 26 at that time is transmitted to the information providing server 50. Also, each of the first and the second tag reading times is counted by the timer 55 of the information providing server 50.

Here, the handrail belt 10 of the escalator 100 is rotating at a predetermined time and a determined speed. The information receiving unit 54 updates the first tag reading time when the tag ID 26 from the reader/writer device is same ID. An updating period time, in which the information receiving unit 54 updates the tag ID 26 to new tag ID 26 is equal to the rotating period time of the handrail belt rotating for one cycle.

Therefore, it is possible to calculate the rotational speed (i.e. the escalator operating speed [m/s]) of the handrail belt 10 based on the peripheral length of the handrail belt 10 and the updating period time. Since the escalator is often controlled to be constant, the operating speed of the escalator 100 can be stored in the information providing server 50 in advance. On the other hand, as described above, by calculating the operating speed of the escalator 100 from the updating period time of the reader/writer device 30, it is possible to respond dynamically even with variation in the operating speed of the escalator 100.

(S105) The calculation unit 52 of the information providing server 50 calculates the position of the user in the escalator 100.

(S106) The information providing unit 51 of the information providing server 50 transmits the information 53 to the user 71 via the portable terminal 60.

It is preferred to select the information of the information database 53 in the database to be provided corresponding to the user position on the escalator of the user 70. If the time that the user needs to get off the escalator is short, the first information with the small amount is selected, and if the time that the user need to get off the escalator is long, the second information with the large amount.

The calculation of user position according to the calculating unit 52 (S105) is described with reference to FIG. 10.

After riding the escalator 100, without being aware of the position in particular, the user keeps the portable terminal close to the tag portion 20 in the vicinity of the step portion(this tag portion is denoted as "20a" and the tag of the tag portion 20a is denoted as "21a") (S102). Then, the position in which the user 70 keeps the portable terminal 60 close to the tag portion 20a is denoted as "P1".

Further, after the portable terminal 60 reads the tag 21a at the "PI," the portable terminal 60 transmits the portable terminal ID 61 and the tag ID 26 to the information providing server 50 (S103 ∼ S104).

Before the position where the user 70 keeps the portable terminal 60 close to the tag 21a and when the tag 21a came into reading range "A" of the reader/writer device 30, the reader/writer device 30 transmits to the information providing server 50 (S100-S101).

The calculating unit 54 of the information providing server 50 can calculate a distance (of the user's position) from the "PO" position where the reader/writer device reads the tag 21a at the "P1" position, where the portable terminal 60 reads the tag 21a on the basis of the operating speed of the escalator 100 (the moving speed of the handrail belt 10) and a difference [sec] between the first tag reading time that the portable terminal reads the tag 21a and the second tag reading time that the reader-writer device reads the tag 21a.

By setting the total length of the escalator 100 (about half of the peripheral length of the handrail belt 10) in advance, it is possible to determine the distance L1 that the user at the "P1" has until getting off the escalator 100. (Of course, it is assumed that the user stays at that step portion and does not run up). Further, it is possible to calculate the remaining time that the user 70 is riding on the escalator 100 from the operating speed of the escalator 100.

Then, based on a user attribute associated with the portable terminal ID 61 obtained by reading the tag 21a, the information providing unit 51 transmits the appropriate information 53 for the user 70 to the portable terminal 60 (S106). At this time, the information providing unit 51 receives the information of the user position "P1" from calculation unit 52, and provides the information of the information database 53 according to the user's position (or the remaining time). A relationship between the transmission time and the transmitted amount of data can be defined in advance, but may be calculated based on the amount of data and the transmitting speed.

For example, when there is a first information of the information database 53 and a second information of the information database 53 associated with the portable terminal ID 61, the calculating unit calculates the remaining time by using the user's position, and the information providing unit 51 transmits the information with the larger amount of the first and second informations of the information database 53 if the remaining time is over a predetermined value; and transmits the information with the smaller amount of the first and second informations of the information database 53 if the remaining time is less than the predetermined time.

Further, it is preferred that the provision of information of the information database 53 to the portable terminal 60 is to be completed until the getting-off position (P3) of the user 70, but it is not limited thereto. After the user passes through the position "P3", the provision of information of the information database 53 may be completed within a certain time.

Here, until the information of the information database 53 is transmitted after the information providing server 50 read the tag 21 from the portable terminal 60, the user 70 is moving at an operation speed of the escalator. For example, the user has moved to the position "P2" until the portable terminal 60 starts to receive the information of the information database 53.

The information providing unit 51 sets the time needed until the information of the information database 53 starts to be transmitted after the user 70 keeps the portable terminal 60 close to the tag 21a as a data processing time in advance. Further, the information 52 is desirable to have the amount transmittable at a distance L2 corresponding to the time obtained by subtracting the data processing time from the remaining time.

According to the information providing system 101 of the present embodiment described above, the tag 21 may be attached to the handrail belt 10 of the passenger conveyor such as moving walkways or escalators, and the user 70 can know the information of the information database 53 on the display of the portable terminal 60. Therefore, the information providing system 101 does not require a large-scale construction such that the conventional system has detectors and displays, and can set up easily even if a passenger conveyor 60 is already provided.

Further, by attaching a tag 21 to the handrail belt 10, the user 70 can keep the portable terminal 60 close to the tag 21 easily since the user 70 on the step portion moves at same speed as the tag 21. If the tag is on the handrail without the handrail belt as conventional system, it is difficult for the user 70 to keep the portable terminal 60 close to the tag 21 since the handrail itself does not move.

Since the appropriate information is provided for the portable terminal 60 according to the behavior history of the user 70 and the user attribute, the user can see and get the information suitable for the user.

Further, by providing the selective information of the information database 53 based on the calculated user position information of the passenger conveyor, the information providing system makes it possible to provide information more effectively.

The information of the information database 53 is not limited to a data content. The information of the information database 53 may be a URL (Uniform Resource Locator) for accessing to the data content stored in the information providing server 50. In this case, the time of providing information of the information database 53 can be reduced.

Since both the first tag reading time and the second tag reading time are counted by the timer 55 of the information providing server 50, the information providing server 50 can detect the user/s position accurately.

Hereinafter, other embodiments of the information providing system in the passenger conveyor are described. The description of the same points as those of the first embodiment is omitted.

### (Second Embodiment)

In the first embodiment, the reader/writer device 30 has a function of reading the information stored in the storage unit of the tags 21 (FIG. 6). However, it is possible that a reader/writer device 30 writes a time counted by the timer 33 of the reader/writer device 30 in the storage unit 25 of the tag 21 when the reader/writer 30 detects a tag 21 in the range "A".

FIG. 11 is a functional block diagram of the reader-writer 30. In the present exemplary embodiment, the reader-writer 30 includes a timer 33, and a tag information writing unit 34 to write the time obtained by the timer 33 in the storage unit 25 of the tag 21. That is, the reader writer 30 has a writing function (a tag writer). In the present embodiment, since there is no communication between the information providing server 50 and the reader writer 30, a network 40 and network communication unit 32 are not essential components.

In the present exemplary embodiment, a tag ID 26, a server identification information 27, and a writing time 28 are stored in the storage unit 25 of the tag 21 by the reader/writer device 30 (not shown). When a user keeps the portable terminal 60 close to the tag 21 the portable terminal 60 reads the writing time, the portable terminal 60 transmits the portable terminal ID 61, the tag ID 26, and the writing time 28 to the information providing server 50. A processing flow that the information providing server 50 performs is the same as that of the first embodiment. In the present exemplary embodiment, the write time 28 is corresponds to the first tag reading time in the first embodiment.

The time that the users keep the portable terminal 60 to the tag 21 and read information from the tag 21 may be acquired by the timer 65 of the portable terminal 60. In addition, based on the writing time and the reading time, the portable terminal 60 may calculate the user's position (S105) and transmits information of the calculated user position to the information providing server 50. In this case, an operation speed of the escalator 100 may be set in the storage unit of the portable terminal 60 in advance.

According to the information providing system 101 of the present exemplary embodiment, it is possible to simplify the system configuration further.

### <Unclaimed Example >

In the first embodiment, detecting the position on the escalator of the user 70 is described. However the position of the user 70 is not required in this example. After the action that the user 70 keeps the portable terminal 60 close to the tag portion 20 worked as a trigger, the portable terminal 60 may transmit at least the portable ID 61 to the information providing server 50 and the information providing server 50 may transmit an information according to the portable terminal ID61 to the portable terminal 60.

In the present example, as the detection of the tag 21 in the reader/writer device 30 is not required (not essential). The network 40 and the reader/writer device 30 are also not an essential component.

According to the information providing system 101 of the present example, without identifying the position of the user 70 and with a simple configuration, it is possible to provide the information of the information database 53 to the user 70 that keeps the portable terminal 60 close to the tag portion 20 in the passenger conveyor.

### <Third embodiment>

In general, a plurality of escalators 100 may be disposed in a building. Both an up escalator and a down escalator are provided among two floors usually. In the case of the building having the third floor or more, both the up and down escalators are provided between the first and second floors and the up and down escalators are also provided between the second and third floors. Further, if it is a large building having large floor space, a plurality of escalators may be provided even in the same floor.

Therefore, in the third embodiment, the information providing server 50 has the information to which escalators the tag 21 corresponding to the tag ID 26 is attached. Thus, the same user 70 may utilize a plurality of escalators. It is possible to transmit the appropriate information corresponding to the escalator that the user is getting on.

Here, for example, many escalators 100 are provided in the commercial facilities such as a department store or a shopping mall. In the present embodiment, for example, the information of the information database 53 relative to "the shop in the vicinity of the landing of the escalator 100 or the floor" that the user is moving to, is provided. Thus, for example, in the case of a female to be a certain age, if not considering the location of the escalator 100, the user 70 of the portable terminal 60, information suitable for women in this age is selected. However, by considering the location as in the present exemplary embodiment, the information about "the shop" that is suitable for women in her age is possible to provide.

In the present exemplary embodiment, the information providing server 50 recognizes to which escalator the tag 21 corresponding to the tag ID 26 is attached. An information (tag location information table, not shown) associated with the tag ID26 and the ID of escalator (escalator ID) that the tag corresponding to the tag ID is attached to, is stored in the storage unit of the information providing server 50 in advance. The tag location information table may be able to be recognized, it is not limited to the example above.

Then, the information providing unit 51 of the information providing server 50 selects the information 53 according to not only the portable terminal ID 61 but also the escalator ID and provides the information of the information database 53 to the user 70.

According to the information providing system 101 of the present exemplary embodiment, it is possible that in addition to attributes of the user 70, the information
providing system provides information of the information database 53 corresponding to the location that the user 70 is moving to in the building.

<Fourth embodiment> As mentioned above, in general there may be a plurality of escalators in the building. Further, the user often transits the escalator 100 continuously and moves to upper or lower levels. Therefore, in the fourth embodiment, after the user 70 received the providing information of the information database 53 and got off the escalator 100, and was provided with the information of the information database 53 that is suitable for the determination result, the information providing system determines which action the user selected, whether the user will transit the next escalator 100 continuously or will remain in the arrival floor.

Figure 12 is a schematic diagram of an information providing system 101 according to the present exemplary embodiment. In the escalator 100a, the user 70 has completed the acquisition of the information of the information database 53 by the process described in the above embodiment. Further, the information providing system 101 is also configured for the second escalator 100b, and the information providing server 50 is common.

The user transits a second escalator 100 continuously (P4) or user remains in the second floor after the user gets off the first escalator 100.

Therefore, after the information of the information database 53 is provided in the escalator 100a of the first escalator, if the information providing server 50 reads the tag 21 from the portable terminal 60 of the same portable terminal ID 61 within a predetermined time (for example, from several seconds to several tens of seconds), the information providing server 50 can determine if the user will transit the second escalator 100b and provides information of the information database 53 corresponding thereto. The information of the information database 53 in this case may be the information on the second floor that the escalator 100b arrives, or the information relative to the continuation of the information 53 that was provided for on the first floor. In this case, the information providing server 50 set the priority information of a plurality of the information corresponding to the portable terminal ID 61 in advance, and may provide the information of the information database 53 according to the priority.

On the other hand, after the information 53 is provided in the escalator 100a of the first escalator, if the information providing server 50 does not read the tag 21 from the portable terminal 60 of the same portable terminal ID61 within a predetermined time, an additional information may not be provided since the user may be staying on the arrival floor 100a. Even in this case, the information providing server 50 may provide the information 53 corresponding to the arrival floor. For example, it is possible to provide detailed information about the shop floor or the available coupons to the user 70.

In the present exemplary embodiment is described in terms of the two escalators 100a, 100b, and the same way may be applied to the transit of three or more.

The embodiment described above is not limited thereto, and various modifications may be made without departing from the gist of the present invention.

In the embodiment described above, the tag portion 20 of the 10 handrail belt, for example, is described of subjecting the target marks, but it is preferred to display the fact that the passenger conveyor is provided with an information providing system 101 or the installation location of the tag portion 20 to the display medium such as paper media or the digital signage that is provided at a position adjacent to the passenger conveyor the position of the tag portion 20. Further, it is desirable to transmit in advance the position of the tag portion 20 to the portable terminal 60 of the user 70.

In the above embodiment, it is described that the information providing server 50 and the reader/writer device 30 are connected via the network 40, but the information providing server 50 and the reader/writer device 30 may be integrated as a device that combines the functions of the information providing server 50 and the reader/writer device 30. The combined device may be provided in the installation position of the reader /writer 30.

In the above embodiment, the use of the tag of a passive type without a battery is described, however it is possible to use the tag 21 of the active type with a built-in battery. It is possible to reduce the cost by using the passive-type tags as the above embodiment.

In the above embodiment, the server identification information 27 for identifying the information providing server 50 is stored in the storage unit 25 of the tag 21 such that the portable terminal 60 can perform communication when the portable terminal 60 the user keeps the portable terminal close to the tag 21. However, instead of this, the storage unit of the portable terminal 60 has the information that associates the server identification information 27 with the tag ID 26, and it is possible to perform communication with the information providing server 50 that is associated with the tag ID 26 when keeping the portable terminal 60 close to the tag ID 26 and reading the tag ID 26.

In the above embodiment, the position of the user 70 is calculated on the basis of the time that the reader-writer device 30 read the tag 21 in the range A and time that the user keeps the portable terminal 60 close to the tag 21. However, without providing the reader/writer device 30, it is also possible to guess the position of the user 70. Here, in the information providing server 50, the moving speed and the circumferential length of the handrail belt 10 is set in advance (for example, a rotation period, is 60 seconds), and it is assumed that the distance that the tag 21 rotates at one cycle is predetermined.

In the information providing system 101, the user often keeps the portable terminal 60 close to the tag portion 20 soon after getting on the escalator 100 (in the vicinity of the landing of the escalator 100). Therefore, the information providing server 50 can estimate that the rotational position of the handrail belt 10 which corresponds to the time period that the tag 21 was read frequently in the rotation cycle of the tag 21 each (60 seconds) is in the vicinity of the landing of the escalator 100 (corresponding to the position that the user kept the portable terminal 60 close to the tag most frequently). In this case, the information providing system 101 can estimate a position of the vicinity of the landing of the escalator 10 by sampling a time period reading of the tag 21 that is frequently in the rotation cycle during a predetermined time after the start of operation of the escalator 100. Then, for example, the information providing system 101 does not detect the user position and provide the information not depending on the amount of data during the sampling. On the other hand, after the predetermined time, the information providing system 101 can calculate the user position according to the estimated position of the vicinity of the landing of the escalator 100 and the tag reading time by the portable terminal, and provide the information depending the amount of data.

Further, the information providing system does not need the reader/writer device when the moving speed and the circumferential length of the handrail belt 10 is set in advance and the position of the handrail belt at the start of operation of the escalator (that is, an initial position of the tag) is already known. The information providing server can calculate position of the tag based on the moving speed, the circumferential length of the handrail belt, and the initial position of the tag.

When the positions of the handrail belt at the start of operation of the escalator (the initial position of the tag) in each operation are different respectively, if the operation manager of the escalator transmits the initial position information to the information providing server 50 in advance, the information providing server 50 can calculate the tag position based on the elapsed time and the initial position, and the reader/writer device 30 may not be required.

The present application is based on Japanese Priority Application No. JP2013-142500 filed on July 8, 2013.

## Claims

1. An information providing system (101) comprising:
a passenger conveyor (100) including a handrail belt (10) comprising a plurality of tag portions (21) each including a storage unit (25) that stores a tag identification information (26);
a portable terminal (60) that reads a first tag identification information (26) and transmits the first tag identification information (26) and a portable terminal identification information (61);
an information providing device (50) that transmits a providing information (53) corresponding to the first tag identification information and the portable terminal identification information (61); and
(a) a reader device (30) such that at least a part of the handrail belt (10) is within communicable range,
wherein the reader device (30) reads a second tag identification information and transmits the second tag identification information to the information providing device (50), and the information providing device (50) calculates a user position based on the first tag identification information (26), the second tag identification information, and a first tag reading time when the portable terminal (60) reads the first tag identification information (26), a second tag reading time when the reader device (30) reads the second tag identification information, and a speed value of the handrail belt (10), or
(b) a writer device (30) such that at least a part of the handrail belt (10) is within communicable range, the writer device (30) including a timer (33), and writing the writing time obtained by the timer (33) in the storage unit (25);
wherein the portable terminal (60) reads the first tag identification information (26) and the writing time; and
wherein the information providing device (50) calculates a user position based on the first tag identification information (26), and a first tag reading time when the portable terminal (60) reads the first tag identification information (26), the writing time information, and a speed value of the handrail belt (10).

2. The information providing system (101) according to claim 1, wherein the information providing device (50) transmits an information selected according to the user position.

3. The information providing system (101) according to claim 1 or 2, further comprising a plurality of passenger conveyors,
wherein the information providing device (50)
identifies a passenger conveyor corresponding to the read storage unit (25) based on the first tag identification information (26) and information about which passenger conveyer the storage unit (25) corresponding to the first tag identification information (26) is attached to, and
transmits the providing information (53) to the portable terminal (60) according to the information of the identified passenger conveyor and the portable terminal identification information (61).

4. The information providing system (101) according to any one of claims 1-3, further comprising a plurality of passenger conveyors, wherein the information providing device (50)
determines if it reads tag identification information from the portable terminal (60) of the same portable terminal identification information (61) within a predetermined time or not, and
transmits the providing information (53) to the portable terminal (60) according to the result.

5. The information providing system (101) according to any of claims 1-4, wherein
each of the plurality of tag portions (21) includes a wireless communicating unit (24) that transmits the tag identification information (26) to the portable terminal (60); and
the tag portions (21) are disposed at intervals corresponding to a step interval of the passenger conveyor (100).

6. The information providing system (101) according to claim 5, wherein each tag portion (21) is on an exposed surface of the handrail belt (10).

7. The information providing system (101) according to claim 5 or 6, further comprising a target mark located at a position corresponding to each tag portion (21).

8. The information providing system (101) according to claim 5 or 6, further comprising a handrail that the handrail belt attaches to, and a step portion (90) that moves at substantially a same speed as the moving speed of the handrail belt (10).

## Patentansprüche

1. Informationsbereitstellungssystem (101), umfassend:
ein Passagierförderband (100) einschließlich eines Handlaufbands (10), das eine Vielzahl von Tag-Abschnitten (21) umfasst, die jeweils eine Speichereinheit (25) beinhalten, die eine Tag-Identifikationsinformation (26) speichert;
ein tragbares Endgerät (60), das eine erste Tag-Identifikationsinformation (26) liest und die erste Tag-Identifikationsinformation (26) und eine Identifikationsinformation eines tragbaren Endgeräts (61) überträgt;
eine Informationsbereitstellungsvorrichtung (50), die eine Bereitstellungsinformation (53) überträgt, die der ersten Tag-Identifikationsinformation und den Identifikationsinformationen eines tragbaren Endgeräts (61) entspricht; und
(a) ein Lesegerät (30), sodass mindestens ein Teil des Handlaufbands (10) innerhalb eines kommunizierbaren Bereichs ist,
wobei das Lesegerät (30) eine zweite Tag-Identifikationsinformation liest und die zweite Tag-Identifikationsinformation an die Informationsbereitstellungsvorrichtung (50) überträgt und die Informationsvermittlungsvorrichtung (50) eine Benutzerposition basierend auf der ersten Tag-Identifikationsinformation (26), der zweiten Tag-Identifikationsinformation und einer ersten Tag-Lesezeit, wenn das tragbare Endgerät (60) die erste Tag-Identifikationsinformation (26) liest, einer zweiten Tag-Lesezeit, wenn das Lesegerät (30) die zweite Tag-Identifikationsinformation liest, und einem Geschwindigkeitswert des Handlaufbands (10) berechnet, oder
(b) ein Schreibgerät (30), sodass mindestens ein Teil des Handlaufbands (10) innerhalb eines kommunizierbaren Bereichs ist, wobei das Schreibgerät (30) einen Zeitmesser (33) beinhaltet und die Schreibzeit, die von dem Zeitmesser (33) erhalten wird, in der Speichereinheit (25) schreibt;
wobei das tragbare Endgerät (60) die erste Tag-Identifikationsinformation (26) und die Schreibzeit liest; und
wobei die Informationsbereitstellungsvorrichtung (50) eine Benutzerposition basierend auf der ersten Tag-Identifikationsinformation (26) und einer ersten Tag-Lesezeit berechnet, wenn das tragbare Endgerät (60) die erste Tag-Identifikationsinformation (26), die Schreibzeitinformation und einen Geschwindigkeitswert des Handlaufbands (10) liest.

2. Informationsbereitstellungssystem (101) nach Anspruch 1, wobei die Informationsbereitstellungsvorrichtung (50) eine Information überträgt, die gemäß der Benutzerposition ausgewählt ist.

3. Informationsbereitstellungssystem (101) nach Anspruch 1 oder 2, ferner umfassend eine Vielzahl von Passagierförderbändern,
wobei die Informationsbereitstellungsvorrichtung (50)
ein Passagierförderband entsprechend der gelesenen Speichereinheit (25) basierend auf der ersten Tag-Identifikationsinformation (26) und Informationen darüber identifiziert, an welchem Passagierförderband die Speichereinheit (25) entsprechend der ersten Tag-Identifikationsinformation (26) befestigt ist, und
die Bereitstellungsinformationen (53) an das tragbare Endgerät (60) gemäß den Informationen des identifizierten Passagierförderbands und den Identifikationsinformationen eines tragbaren Endgeräts (61) überträgt.

4. Informationsbereitstellungssystem (101) nach einem der Ansprüche 1-3, ferner umfassend eine Vielzahl von Passagierförderbändern, wobei die Informationsbereitstellungsvorrichtung (50)
bestimmt, ob sie Tag-Identifikationsinformationen von dem tragbaren Endgerät (60) der gleichen Identifikationsinformationen eines tragbaren Endgeräts (61) in einer vorbestimmten Zeit liest oder nicht, und
die Bereitstellungsinformationen (53) an das tragbare Endgerät (60) gemäß dem Ergebnis überträgt.

5. Informationsbereitstellungssystem (101) nach einem der Ansprüche 1-4, wobei
jeder der Vielzahl von Tag-Abschnitten (21) eine drahtlose Kommunikationseinheit (24) beinhaltet, die die Tag-Identifikationsinformationen (26) an das tragbare Endgerät (60) überträgt; und
die Tag-Abschnitte (21) an Abständen angeordnet sind, die einem Schrittintervall des Passagierförderbands (100) entsprechen.

6. Informationsbereitstellungssystem (101) nach Anspruch 5, wobei jeder Tag-Abschnitt (21) an einer freigelegten Oberfläche des Handlaufbands (10) ist.

7. Informationsbereitstellungssystem (101) nach Anspruch 5 oder 6, ferner umfassend eine Zielmarke, die sich an einer Position befindet, die jedem Tag-Abschnitt (21) entspricht.

8. Informationsbereitstellungssystem (101) nach Anspruch 5 oder 6, ferner umfassend einen Handlauf, an dem das Handlaufband befestigt ist, und einen Stufenabschnitt (90), der sich mit im Wesentlichen der gleichen Geschwindigkeit wie die Bewegungsgeschwindigkeit des Handlaufbands (10) bewegt.

## Revendications

1. Système de fourniture d'informations (101), comprenant :
un escalier mécanique (100) incluant une courroie de main courante (10) comprenant une pluralité de portions à étiquette (21) incluant chacune une unité de stockage (25) qui stocke des informations d'identification d'étiquette (26) ;
un terminal portatif (60) qui lit des premières informations d'identification d'étiquette (26) et transmet les premières informations d'identification d'étiquette (26) et des informations d'identification de terminal portatif (61) ;
un dispositif de fourniture d'informations (50) qui transmet des informations de fourniture (53) correspondant aux premières informations d'identification d'étiquette et aux informations d'identification de terminal portatif (61) ; et
(a) un dispositif de lecture (30) de telle sorte qu'au moins une partie de la courroie de main courante (10) soit au sein d'une portée de communication,
dans lequel le dispositif de lecture (30) lit des secondes informations d'identification d'étiquette et transmet les secondes informations d'identification d'étiquette au dispositif de fourniture d'informations (50), et le dispositif de fourniture d'informations (50) calcule une position d'utilisateur sur la base des premières informations d'identification d'étiquette (26), des secondes informations d'identification d'étiquette, et un premier instant de lecture d'étiquette auquel le terminal portatif (60) lit les premières informations d'identification d'étiquette (26), un second instant de lecture d'étiquette auquel le dispositif de lecture (30) lit les secondes informations d'identification d'étiquette, et une valeur de vitesse de la courroie de main courante (10), ou
(b) un dispositif d'écriture (30) de telle sorte qu'au moins une partie de la courroie de main courante (10) soit au sein d'une portée de communication, le dispositif d'écriture (30) incluant une minuterie (33), et écrivant l'instant d'écriture obtenu par la minuterie (33) dans l'unité de stockage (25) ;
dans lequel le terminal portatif (60) lit les premières informations d'identification d'étiquette (26) et l'instant d'écriture ; et
dans lequel le dispositif de fourniture d'informations (50) calcule une position d'utilisateur sur la base des premières informations d'identification d'étiquette (26), et un premier instant de lecture d'étiquette auquel le terminal portatif (60) lit les premières informations d'identification d'étiquette (26), les informations d'instant d'écriture, et une valeur de vitesse de la courroie de main courante (10).

2. Système de fourniture d'informations (101) selon la revendication 1, dans lequel le dispositif de fourniture d'informations (50) transmet des informations sélectionnées selon la position d'utilisateur.

3. Système de fourniture d'informations (101) selon la revendication 1 ou 2, comprenant en outre une pluralité d'escaliers mécaniques,
dans lequel le dispositif de fourniture d'informations (50)
identifie un escalier mécanique correspondant à l'unité de stockage lue (25) sur la base des premières informations d'identification d'étiquette (26) et d'informations concernant l'escalier mécanique auquel l'unité de stockage (25) correspondant aux premières informations d'identification d'étiquette (26) est attachée, et
transmet les informations de fourniture (53) au terminal portatif (60) selon les informations de l'escalier mécanique identifié et les informations d'identification de terminal portatif (61).

4. Système de fourniture d'informations (101) selon l'une quelconque des revendications 1 à 3, comprenant en outre une pluralité d'escaliers mécaniques, dans lequel le dispositif de fourniture d'informations (50)
détermine s'il lit des informations d'identification d'étiquette à partir du terminal portatif (60) des mêmes informations d'identification de terminal portatif (61) au sein d'une période prédéterminée ou non, et
transmet les informations de fourniture (53) au terminal portatif (60) selon le résultat.

5. Système de fourniture d'informations (101) selon l'une quelconque des revendications 1 à 4, dans lequel
chacune de la pluralité de portions à étiquette (21) inclut une unité de communication sans fil (24) qui transmet les informations d'identification d'étiquette (26) au terminal portatif (60) ; et
les portions à étiquette (21) sont disposées à des intervalles correspondant à un intervalle de marche de l'escalier mécanique (100).

6. Système de fourniture d'informations (101) selon la revendication 5, dans lequel chaque portion à étiquette (21) est sur une surface exposée de la courroie de main courante (10).

7. Système de fourniture d'informations (101) selon la revendication 5 ou 6, comprenant en outre une marque cible située à une position correspondant à chaque portion à étiquette (21).

8. Système de fourniture d'informations (101) selon la revendication 5 ou 6, comprenant en outre une main courante à laquelle la courroie de main courante s'attache, et une portion de marche (90) qui se déplace sensiblement à la même vitesse que la vitesse de déplacement de la courroie de main courante (10).
